# EUROPEAN PATENT APPLICATION

(11) **EP 2 294 933 A2**
(43) Date of publication of application: **16.03.2011**
(21) Application number: 10176701.0
(22) Date of filing: 14.09.2010
(51) Int. Cl.: A23L 1/40

(54) **Improvements in and relating to foodtuffs**

(30) Priority: 14.09.2009 GB 0916042
(71) Applicant: Dunbia (Northern Ireland), Northern Ireland (GB)
(72) Inventor: Slade, Dermott Michael Lee, Dungannon Northern Ireland (GB); Brondon, Andrew James, Dungannon Northern Ireland (GB)
(74) Representative: Johnson, Graham Pierssene

(57) **Abstract**

There are provided sauce concentrates and sauce pellets adapted to be combined with water and/or a water based liquid to produce a sauce. Also provided are methods of making and using such sauce concentrates and pellets.

## Description

### FIELD OF THE INVENTION

The present invention relates to foodstuffs, particularly though not exclusively to sauce pellets and sauce concentrates and to the manufacture thereof.

### BACKGROUND TO THE INVENTION

It is known to provide ready made sauces and sauce mixes that a consumer can purchase and use at home to prepare a meal. Such known sauces come in various forms including liquid sauces provided in jars and dehydrated sauce mixes in powder form provided in sachets. Such sauces and mixes have a number of disadvantages. Liquid sauces require large amounts of packaging and are also bulky making them inconvenient to transport and store. Dehydrated sauce mixes are typically made using cooked ingredients which can compromise the flavour of a meal prepared with them.

Accordingly, the present invention aims to address at least one disadvantage associated with the prior art whether discussed herein or otherwise.

### SUMMARY OF INVENTION

According to a first aspect of the present invention there is provided a sauce concentrate and/or sauce pellet adapted to be combined with water and/or a water based liquid to produce a sauce.

Suitably, there is provided a freshly prepared sauce concentrate and/or sauce pellet adapted to be combined with water and/or a water based liquid to produce a sauce.

Suitably, there is provided a sauce concentrate which is solid or semi-solid. Suitably, there is provided a sauce concentrate in the form of a sauce pellet. Suitably, the pellet is substantially solid at 4°C or lower. Alternatively, there may be provided a sauce concentrate in the form of a semi-solid viscous paste.

Suitably, the sauce concentrate and/or sauce pellet is such that it can be removed from packaging as a single mass suitably substantially without leaving any material behind in the packaging. Suitably, the sauce concentrate and/or sauce pellet is such that it does not flow at 4°C or less. Suitably, the sauce concentrate and/or sauce pellet is such that it substantially does not flow at 25°C or less.

Suitably, the sauce concentrate and/or sauce pellet is plastic in nature at 25°C. Suitably, the sauce concentrate and/or sauce pellet is easy to fracture at 25°C. Suitably, the sauce concentrate and/or sauce pellet is shear thinning.

Suitably, there is provided a sauce pellet adapted to be combined with water and/or a water based liquid such as milk, for example whole fat milk to produce a sauce.

Suitably, there is provided a sauce pellet adapted to be combined with water to produce a sauce.

Suitably, the sauce concentrate/pellet is adapted to be combined with water to produce a cooking sauce. Alternatively, the sauce concentrate/pellet may be adapted to be combined with water to produce a dessert sauce.

Suitably the sauce concentrate/pellet comprises fresh ingredients.

Suitably, the sauce concentrate/pellet is adapted to produce a cook in sauce. By "cook in sauce" it is meant a sauce in which a substrate such as meat is cooked.

Suitably, the sauce concentrate/pellet can be pot and/or pan cooked. By "pot/pan cooked" it is meant that the sauce concentrate/pellet can be mixed with water and/or a water based liquid added to frying pan or pot and cooked. The sauce concentrate/pellet may be used to produce a "pour over sauce" for example a steak sauce which may be cooked in a pan a steak was cooked in whilst the steak is resting and then poured over the steak.

Suitably, the sauce concentrate/pellet is adapted to produce a sauce which thickens. Suitably, in use, the sauce thickens as a substrate is cooked in the sauce.

Suitably, the sauce concentrate/pellet comprises flour, suitably wheat flour. Suitably, the sauce concentrate/pellet comprises an emulsifier. Suitably, the sauce concentrate/pellet comprises an emulsifier comprising flour, suitably wheat flour. Suitably, in use, the emulsifier assists oil to form an emulsion with water in a sauce. Suitably, in use, the emulsifier acts together with an oil/fat to provide viscosity to a sauce. Flour may also act to help set a pellet. Suitably the sauce concentrate/pellet comprises an emulsifier, suitably flour, in an amount of between 1% and 10% by weight, for example between 2.0% and 7.5% by weight.

Suitably, the sauce concentrate/pellet comprises a fibre component, suitably citrus fibre. Suitably, the sauce concentrate/pellet comprises a thickening agent. Suitably, the sauce concentrate/pellet comprises a thickening agent comprising a fibre component, suitably citrus fibre. Suitably, the fibre component comprises a dehydrated fibre which expands in water. Suitably, there is provided a pellet comprising a thickening agent to set the pellet. In use, the thickening agent may provide viscosity to a sauce.

Suitably the sauce concentrate/pellet comprises a fibre component, suitably citrus fibre, in an amount of between 0.1 % and 4% by weight, for example between 0.2% and 3.0% by weight.

Suitably, the thickening agent absorbs water from other components in the sauce concentrate/pellet. There may thus be provided a sauce concentrate/pellet which becomes more viscous and/or more solid on standing following combination of the components. Suitably the thickening agent comprises a fibre component but alternatively, or in addition, it may comprise gelatine and/or a gum, for example xanthan gum. Suitably, the thickening agent does not comprise a gum. Suitably, the sauce concentrate/pellet does not comprise a gum. Suitably, the thickening agent provides substantially no organoleptic contribution.

The sauce concentrate/pellet may comprise a starch component. The starch component may comprise a natural starch and/or a clean declaration modified starch. The starch component may comprise a maize starch, for example a refined waxy maize starch. Suitably, the concentrate/pellet comprises a viscosity modifier. Suitably, the concentrate/pellet comprises a viscosity modifier comprising a starch component. Suitably, in use, the viscosity modifier provides viscosity to a sauce. Starch may act as a stabiliser. Suitably, the starch component is an additional component distinct from the flour though the flour may also comprise starch.

Suitably the sauce concentrate/pellet comprises a starch component in an amount of between 1% and 10% by weight, for example between 2.0% and 8.5% by weight.

Suitably, according to a first aspect of the invention there is provided a sauce concentrate, which is suitably a pellet, adapted to be combined with water to produce a sauce; wherein the concentrate comprises:
(i) an emulsifier;
(ii) a thickening agent; and optionally
(iii) a viscosity modifier.

Suitably, the sauce concentrate, which is suitably a pellet, comprises:
(i) an emulsifier;
(ii) a thickening agent; and
(iii) a viscosity modifier.

Suitably, according to a first aspect of the invention there is provided a sauce concentrate, which is suitably a pellet, adapted to be combined with water to produce a sauce; wherein the concentrate comprises:
(i) flour;
(ii) a fibre component; and optionally
(iii) a starch component.

Suitably, the sauce concentrate, which is suitably a pellet, comprises:
(i) flour;
(ii) a fibre component; and
(iii) a starch component.

Suitably, the sauce concentrate/pellet comprises an oil and/or fat. Suitably, the sauce concentrate/pellet comprises oil, suitably vegetable oil. Alternatively, or in addition, the sauce concentrate/pellet may comprise butter. Suitably, in use, the oil and/or fat act in combination with flour to thicken a sauce.

Suitably, the sauce concentrate/pellet comprises an oil or fat, suitably oil, in an amount of at least 0.1 % by weight. Suitably, the sauce concentrate/pellet comprises an oil or fat, suitably oil, in an amount of between 0.1 % and 7% by weight. Suitably, the sauce concentrate/pellet comprises an oil or fat, suitably oil, in an amount of between 0.1 % and 5% by weight. Suitably, the sauce concentrate/pellet comprises oil in an amount of between 0.5% and 4% by weight, for example between 1% and 4% by weight.

Suitably, there is provided a sauce concentrate, which is suitably a pellet, adapted to be combined with water to produce a sauce, wherein the concentrate comprises:
(i) flour;
(ii) a fibre component;
(iii) a starch component; and
(iv) an oil or fat.

Suitably, the sauce concentrate/pellet comprises tomato paste and/or tomato puree and/or tomato juice. Alternatively, or in addition the sauce concentrate/pellet may comprise butter an/or water. Suitably, the concentrate/pellet comprises a carrier. Suitably, the sauce concentrate/pellet comprises a carrier comprising tomato paste and/or tomato puree and/or tomato juice and/or butter and/or water. Suitably the carrier aids to provide the required viscosity characteristics for manufacture of the sauce concentrate/pellet. Suitably, in use. the carrier assists to balance flavours and/or provide the desired viscosity in a sauce.

Suitably, the sauce concentrate/pellet comprises a carrier, suitably tomato puree and/or tomato paste and/or tomato juice, in an amount of between 5% and 50% by weight. Suitably, the sauce concentrate/pellet comprises a carrier in an amount of between 10% and 45% by weight, for example between 15% and 35% by weight. Suitably, where the carrier comprises butter the quantity of this is in addition to the quantity of oil or fat component of the sauce concentrate/pellet.

Suitably, the sauce concentrate/pellet comprises tomato powder. Alternatively, or in addition the sauce concentrate/pellet may comprise buttermilk powder. Suitably, the sauce concentrate/pellet comprises a bulking agent. Suitably, the sauce concentrate/pellet comprises a bulking agent comprising tomato powder and/or buttermilk. Suitably the bulking agent aids to provide the required viscosity characteristics for manufacture of the sauce concentrate/pellet. Suitably, in use, the bulking agent assists to balance flavours and/or provide the desired viscosity in a sauce. The bulking agent may assist to provide depth of flavour in a sauce.

Suitably, the sauce concentrate/pellet comprises a bulking agent, suitably tomato powder and/or buttermilk powder in an amount of between 5% and 40% by weight. Suitably, the sauce concentrate/pellet comprises a bulking agent in an amount of between 10% and 35% by weight, for example between 25% and 30% by weight.

Suitably, there is provided a sauce concentrate, which is suitably a pellet, adapted to be combined with water to produce a sauce, wherein the concentrate comprises:
(i) flour;
(ii) a fibre component;
(iii) a starch component;
(iv) oil or fat;
(v) a carrier; and
(vi) a bulking agent

The sauce concentrate/pellet may comprise an acidifying component, suitably vinegar.

Suitably, the sauce concentrate/pellet comprises one or more further foodstuffs. Suitably, the concentrate/pellet comprises one or more foodstuffs selected from the group consisting of: vegetables; fruit; milk; cream; flavouring; salt; sugar; sweeteners; spices; herbs, extracts of herbs (powders).

Suitably the concentrate/pellet comprises a combination of wet and dry foodstuffs.

Suitably the sauce concentrate/pellet comprises uncooked ingredients. Suitably the concentrate/pellet comprises uncooked ingredients. The sauce concentrate/pellet may not comprise any cooked ingredients. Suitably, heat treated flour is not considered to be a cooked ingredient Suitably, the concentrate/pellet comprises fresh ingredients.

The sauce concentrate/pellet may comprise only:
(i) flour;
(ii) a fibre component;
(iii) a starch component;
(iv) oil and/or fat;
(v) a carrier;
(vi) a bulking agent;
(vii) salt and/or sugar;
(viii) fresh and/or dried and/or frozen ingredients; and optionally.
(ix) an acidifying component.

The sauce concentrate/pellet may comprise only:
(i) flour;
(ii) a fibre component;
(iii) a starch component;
(iv) oil and/or fat;
(v) a carrier;
(vi) a bulking agent;
(vii) salt and/or sugar;
(viii) fresh ingredients; and optionally
(ix) an acidifying component.

Suitably, the sauce concentrate/pellet is tailored for use with a particular substrate, for example a particular meat. The composition of the sauce concentrate/pellet may be matched to the fat content of the meat. A sauce concentrate/pellet for use with a fatty meat may have a higher flour content and vice versa. When starch is used in place of a flour and oil/fat combination to increase viscosity of a sauce it may provide a lighter free flowing texture and so suitably some starch is used together with flour in the sauce concentrate/pellet to give a good mouth feel to a sauce made from it. If too much flour or starch is used a sauce may become too thick and so they are suitably balanced against one another with less starch being used if more flour is used and vice versa. Suitably, fibre is used to hold the sauce concentrate/pellet together but this may also act to increase the viscosity of a sauce. Suitably, the amount of flour and starch are reduced to off set the thickening effect of the fibre so as to provide a sauce having the desired viscosity and mouth feel. Suitably the amount of flour and fibre used are balanced against one another with less fibre being used if more flour is used and vice versa.

The sauce concentrate/pellet may be manufactured by tailoring the flour content to the substrate that the sauce concentrate/pellet is to be used to make a sauce for. Accordingly, in use, a flour and oil/fat combination may be used as the principle means of controlling viscosity of the sauce. The levels of other components may be adjusted based around this. Suitably, the amount of flour is matched to a substrate the sauce concentrate/pellet will be used with, the amount of fibre is then adjusted as appropriate to make a stable sauce concentrate/pellet and the amount of starch is then adjusted to give a sauce having the desired viscosity.

Suitably, there is provided a pellet. Suitably, the pellet comprises a discrete unit which can be handled without breaking up.

Suitably, the sauce concentrate/pellet comprises flour. Suitably, the sauce concentrate/pellet comprises wheat flour. Suitably, the sauce concentrate/pellet comprises durum wheat flour which may be coarsely ground. Suitably, the sauce concentrate/pellet comprises 00 flour. Suitably, the sauce concentrate/pellet comprises a treated flour. Suitably, the sauce concentrate/pellet comprises a heat treated flour. Suitably, the sauce concentrate/pellet comprises a flour which is treated to kill pathogenic organisms and bacteria. Suitably, the sauce concentrate/pellet comprises a heat treated wheat flour.

Suitably, in use, the flour acts as an emulsifier to assist oil to form an emulsion with water in a sauce. Suitably, in use, the flour acts to thicken a sauce made with the sauce concentrate/pellet. Suitably, in use the flour acts together with an oil and/or fat component to provide viscosity to a sauce made with the concentrate/pellet.

Suitably, the sauce concentrate/pellet comprises flour in an amount of at least 1.5% by weight. Suitably, the sauce concentrate/pellet comprises flour in an amount of at least 2.0% by weight. Suitably, the sauce concentrate/pellet comprises flour, in an amount of at least 2.5% by weight, for example at least: 2.6%; 2.7%; 2.8%; 2.9%; 3.0%; 3.5%; 4.0%; 4.5%; 5.0%; 5.5%; or 6.0% by weight. Suitably, the sauce concentrate/pellet comprises heat treated wheat flour and/or 00 flour, in an amount of at least 2.5% by weight, for example at least: 2.6%; 2.7%; 2.8%; 2.9%; 3.0%; 3.5%; 4.0%; 4.5%; 5.0%; 5.5%; or 6.0% by weight.

Suitably, the sauce concentrate/pellet comprises flour in an amount of no more than 7.5% by weight. Suitably, the sauce concentrate/pellet comprises flour in an amount of no more than 7.0% by weight, for example no more than: 6.9%; 6.8%; 6.7%; 6.6%; 6.5%; 6.0%; 5.5%; 5.0%; 4.5%; 4.0%; 3.5%; or 3.0% by weight. Suitably, the sauce concentrate/pellet comprises heat treated whet flour and/or 00 flour in an amount of no more than 7.0% by weight, for example no more than: 6.9%; 6.8%; 6.7%; 6.6%; 6.5%; 6.0%; 5.5%; 5.0%; 4.5%; 4.0%; 3.5%; or 3.0% by weight.

Suitably, the sauce concentrate/pellet comprises flour in an amount of between 2.0% and 7.5% by weight, for example in an amount of between 2.7% and 6.7% by weight. Suitably, the sauce concentrate/pellet comprises a heat treated wheat flour and/or 00 flour in an amount of between 2.0% and 7.5% by weight, for example in an amount of between 2.7% and 6.7% by weight.

Suitably, the sauce concentrate/pellet comprises a fibre component. Suitably, the sauce concentrate/pellet comprises a citrus fibre which may also be referred to as citrus flour. Suitably, the sauce concentrate/pellet comprises fibre from the pith of citrus plants for example lemon and orange pith. The fibre may comprise dried orange pulp. The sauce concentrate/pellet may comprise Citri-fi 100M40 supplied by Ideal Foods. The sauce concentrate/pellet may comprise Citrus - FE M40 available from FiberStar Inc. Alternatively or in addition the sauce concentrate/pellet may comprise Citrus - FI FG available from FiberStar Inc and/or Citrus - FE Micro Fine available from FiberStar Inc. The citrus fibre used may be selected depending on the liquid content of the sauce concentrate/pellet components.

Suitably, citrus fibre acts as a dehydrating component and may absorb water from other components to give the sauce concentrate/pellet a firm consistency.

Suitably, the sauce concentrate/pellet comprises a fibre component in an amount of at least 0.1% by weight. Suitably, the sauce concentrate/pellet comprises a fibre component in an amount of at least 0.2% by weight, for example at least: 0.3%; 0.4%; 0.5%; 0.6%; 0.7%; 0.8%; 0.9%; 1.0%; 1.5%; 2.0%; or 2.5% by weight. Suitably, the sauce concentrate/pellet comprises citrus fibre in an amount of at least 0.2% by weight, for example at least: 0.3%; 0.4%; 0.5%; 0.6%; 0.7%; 0.8%; 0.9%; 1.0%; 1.5%; 2.0%; or 2.5% by weight.

Suitably, the sauce concentrate/pellet comprises a fibre component in an amount of no more than 3.5% by weight. Suitably, the sauce concentrate/pellet comprises a fibre component in an amount of no more than 3.0%, for example no more than: 2.9%; 2.8%; 2.7%; 2.6%; 2.5%; 2.0%; 1.5%; 1.0% or 0.5% by weight. Suitably, the sauce concentrate/pellet comprises citrus fibre in an amount of no more than 3.0%, for example no more than: 2.9%; 2.8%; 2.7%; 2.6%; 2.5%; 2.0%; 1.5%; 1.0% or 0.5% by weight.

Suitably, the sauce concentrate/pellet comprises a fibre component in an amount of between 0.1% and 3.5% by weight, for example in an amount of between 0.3% and 2.8% by weight. Suitably, the sauce concentrate/pellet comprises citrus fibre in an amount of between 0.1% and 3.5% by weight, for example in an amount of between 0.3% and 2.8% by weight.

Suitably the weight ratio of flour:fibre component in the sauce concentrate/pellet lies within the range of 1:2 to 75:1. Suitably, the weight ratio of flour:fibre component in the sauce concentrate/pellet lies within the range of 1:1 to 18:1. Suitably, the weight ratio of flour:fibre component in the sauce concentrate/pellet lies within the range of 1.5:1 to 8:1, for example between 2:1 and 7.3:1. Suitably the weight ratio of heat treated wheat flour and/or 00 flour:citrus fibre in the sauce concentrate/pellet lies within the range of 1:2 to 75:1. Suitably, the weight ratio of heat treated wheat flour and/or 00 flour:citrus fibre in the sauce concentrate/pellet lies within the range of 1:1 to 18:1. Suitably, the weight ratio of heat treated wheat flour and/or 00 flour:citrus fibre in the sauce concentrate/pellet lies within the range of 1.5:1 to 8:1, for example between 2:1 and 7.3:1.

Suitably, the weight ratio of heat treated wheat flour and/or 00 flour:citrus fibre in the sauce concentrate/pellet is determined by the amount of flour in the sauce concentrate/pellet. Suitably, if a greater amount of flour is present then suitably a lower amount of citrus fibre is present. The ratio of flour:citrus fibre may thus lie towards a higher flour ratio when the sauce concentrate/pellet comprises more flour and vice versa.

Suitably, the amount of flour affects the viscosity of a composition, suitably a paste, from which the sauce concentrate/pellet is formed, suitably if all other components are used in equal amounts then the greater the amount of flour the thicker the composition. Suitably, the higher the moisture content of the remaining components of the sauce concentrate/pellet the greater the amount of flour the sauce concentrate/pellet comprises.

Suitably, the moisture content and flour content of the sauce concentrate/pellet are tailored such that a paste form which the sauce concentrate/pellet is formed has a suitable viscosity to allow it to be pumped whilst allowing it to produce a substantially solid sauce pellet or a substantially solid or semi-solid sauce concentrate. Suitably, the flower and moisture content of the sauce concentrate/pellet are balanced so that the components of the sauce concentrate/pellet stay bound during transport and storage.

Suitably, the sauce concentrate/pellet has a moisture content of 60% by weight or less, for example 50% by weight or less. Suitably, the sauce concentrate/pellet has a moisture content of 40% by weight or less, for example 35%; 30%; 25%; 20%; 15%; 10%; or 5% by weight or less. Suitably, a pellet has a moisture content of 40% by weight or less, for example 35%; 30%; 25%; 20%; 15%; 10%; or 5% by weight or less.

Suitably, the sauce concentrate/pellet has a moisture content of at least 5% by weight. Suitably, the sauce concentrate/pellet has a moisture content of at least 10% by weight, for example 15% or more. Suitably, the sauce pellet has a moisture content of between 5% and 35% by weight. Suitably, the pellet has a moisture content of between 10% and 30% by weight, for example between 15% and 25% by weight.

Suitably, the sauce concentrate/pellet has an active water (aW) value of 1.00 or less. Suitably, the sauce concentrate/pellet has an active water value of 0.95 or less. Suitably, the sauce concentrate/pellet has an active water value of 0.90 or less. Suitably, the sauce concentrate/pellet has an active water value of 0.85 or less. Suitably, the sauce concentrate/pellet has an active water value of 0.80 or less. The sauce concentrate/pellet may have an active water value of between 0.60 and 0.90. Suitably, the sauce concentrate/pellet has an active water value of between 0.70 and 0.80.

Suitably, the active water (aW) value of the sauce concentrate/pellet is determined by aW test method BS ISO 21807, 2004.

The sauce concentrate/pellet may comprise a viscosity modifier. Suitably, the sauce concentrate/pellet comprises a starch component. Suitably, the sauce concentrate/pellet comprises a natural.. The sauce concentrate/pellet may comprise a modified starch, suitably a clean declaration modified starch. The sauce concentrate/pellet may for example comprise Novation Prima 300 or Prima 600 available from national Starch and supplied by Univar Ltd. Alternatively, or in addition the sauce concentrate/pellet may comprise corn flour. Alternatively, or in addition, the sauce concentrate/pellet may comprise Col-flo available from national Starch and supplied by Univar Ltd. as the starch component. The sauce concentrate/pellet may comprise a starch component to help to thicken a paste from which the sauce concentrate/pellet is formed. The amount of starch component used may therefore depend on the other components in the sauce concentrate/pellet.

Suitably, the relative amounts of components in the sauce concentrate/pellet are tailored to provide the desired sauce concentrate/pellet consistency. Suitably, the sauce concentrate/pellet is of such a consistency that it substantially retains its shape without breaking up or becoming flowable during storage at 4°C for 10 days or more for example for up to 28 days.

Suitably the higher the heat treated wheat flour and/or 00 flour content of the sauce concentrate/pellet the lower the citrus fibre content. If the heat treated wheat flour and/or 00 flour content of the sauce concentrate/pellet is higher then the starch content may be lower. Suitably the higher the flour content of the sauce concentrate/pellet the lower the citrus fibre and starch content.

Suitably the lower the heat treated wheat flour and/or 00 flour content of the sauce concentrate/pellet the higher the citrus fibre content. If the heat treated wheat flour and/or 00 flour content of the sauce concentrate/pellet is lower then the starch content may be higher. Suitably the lower the flour content of the sauce concentrate/pellet the higher the citrus fibre and starch content.

Suitably, the sauce concentrate/pellet comprises a starch component in an amount of at least 1.5% by weight. Suitably, the sauce concentrate/pellet comprises a starch component in an amount of at least 2.0% by weight. Suitably, the sauce concentrate/pellet comprises flour, in an amount of at least 2.5% by weight, for example at least: 2.6%; 2.7%; 2.8%; 2.9%; 3.0%; 3.5%; 4.0%; 4.5%; 5.0%; 5.5%; 6.0%; 6.5%; 7.0%; 7.5% or 8.0% by weight.

Suitably, the sauce concentrate/pellet comprises a starch component in an amount of no more than 9.0% by weight. Suitably, the sauce concentrate/pellet comprises flour in an amount of no more than 8.5% by weight, for example no more than: 8.0%; 7.9%; 7.8%; 7.7%; 7.6%; 7.5%;7.0%; 6.5%; 6.0%; 5.5%; 5.0%; 4.5%; 4.0%; 3.5%; or 3.0% by weight. Suitably, the sauce concentrate/pellet comprises heat treated whet flour and/or 00 flour in an amount of no more than 7.0% by weight, for example no more than: 6.9%; 6.8%; 6.7%; 6.6%; 6.5%; 6.0%; 5.5%; 5.0%; 4.5%; 4.0%; 3.5%; or 3.0% by weight.

Suitably, the sauce concentrate/pellet comprises a starch component in an amount of between 2.0% and 9.0% by weight.

Suitably, the amount of starch component in the sauce concentrate/pellet is determined by the amount of heat treated wheat flour and/or 00 flour:citrus fibre in the sauce concentrate/pellet. If a greater amount flour is present then a lower amount of starch component may be present.

Suitably the weight ratio of starch component:fibre component in the sauce concentrate/pellet lies within the range of 1:2 to 75:1. Suitably, the weight ratio of starch component:fibre component in the sauce concentrate/pellet lies within the range of 1:1 to 18:1. Suitably, the weight ratio of starch component:fibre component in the sauce concentrate/pellet lies within the range of 1.5:1 to 8:1, for example between 1.9:1 and 7.3:1

Suitably, the flour and starch component are present in similar levels to one another. Suitably, the ratio of flour:starch component is from 1:2 to 2:1. Suitably, the ratio of flour:starch component is from 1:1.5 to 1.5:1. The ratio of flour:starch component may from 1.2:1 to 1:1.2, for example around 1:1.

Suitably, the ratio of flour:starch component is at least 1:1.5 for example at least 1:1.2. Suitably, the ratio of flour:starch component is no more than 1.5:1, for example no more than 1.2:1.

Suitably, the sauce concentrate/pellet is stable at a temperature of 4°C or less. Suitably, the pellet is such that it is substantially solid at 4°C. Suitably, the sauce concentrate/pellet is such that if left for 10 days or more, for example up to 28 days at 4°C it substantially retains its shape. Suitably, the sauce concentrate/pellet is such that it does not require to be frozen to preserve the freshness of its components and/or to keep its shape.

Suitably, the sauce concentrate/pellet has a shelf life of at least 10 days at a temperature of 4°C or less. Suitably, the sauce concentrate/pellet has a shelf life of up to 28 days at a temperature of 4°C or less. Suitably, the sauce concentrate/pellet may be frozen to prolong its shelf life.

Suitably the pH of the composition from which a sauce concentrate and/or sauce pellet is formed is between 3.0 and 6.5, for example between 3.0 and 6.0. Suitably, the pH is measured immediately following the mixing of the final components. Suitably, the composition has a pH of between 3.5 and 5.0. Suitably, the composition has a pH of between 3.5 and 4.5, for example between 4.0 and 4.5. Suitably, the composition may have a low pH to provide a sauce concentrate and/or pellet having a good shelf life.

Suitably, the composition has a pH of 6.5 or less. Suitably, the composition has a pH of 6.0 or less. Suitably, the composition has a pH of 5.5 or less. Suitably, the composition has a pH of 5.0 or less. Suitably, the composition has a pH of 4.5 or less. Suitably the composition has a pH of 4.0 or less.

Suitably, the shelf life of the sauce concentrate/pellet may be managed by a combination of active water (aW) and salt content of the sauce concentrate/pellet and the pH of the composition from which the sauce concentrate/pellet is formed.

Suitably, the sauce concentrate/pellet has a salt content of at least 2% by weight. Suitably, the sauce concentrate/pellet has a salt content of at least 3% by weight. Suitably, the sauce concentrate/pellet has a salt content of at least 4% by weight. Suitably, the sauce concentrate/pellet has a salt content of at least 5% by weight. Suitably, the sauce concentrate/pellet has a salt content of at least 6% by weight. Suitably, the sauce concentrate/pellet has a salt content of at least 7% by weight, for example 8% by weight or more.

Suitably, the sauce concentrate/pellet has a salt content of between 2% and 12% by weight. Suitably, the sauce concentrate/pellet has a salt content of between 4% and 10% by weight. Suitably, the sauce concentrate/pellet has a salt content of between 6% and 10% by weight, for example between 7% and 9% by weight.

Suitably, the sauce concentrate/pellet has a viscosity of between 800 and 300 Pa s measured at 25°C and a shear rate of 1 s⁻¹. Suitably, the sauce concentrate/pellet has a viscosity of between 5500 and 20,000 Pa s measured at 25°C and a shear rate of 0.1 s⁻¹. Suitably, the sauce concentrate/pellet has a viscosity of between 150 and 800 Pa s measured at 25°C and a shear rate of 5 s⁻¹. Suitably, the viscosity of the sauce concentrate/pellet is measured using a TA Instruments ARES rheometer fitted with parallel plates (25mm diameter, gap of 2mm).

Suitably, there is provided a sauce concentrate having a viscosity of between 800 and 1100 Pa s measured at 25°C and a shear rate of 1 s⁻¹. Suitably, the sauce concentrate has a viscosity of between 5500 and 6500 Pa s measured at 25°C and a shear rate of 0.1 s⁻¹. Suitably, the sauce concentrate has a viscosity of between 150 and 350 Pa s measured at 25°C and a shear rate of 5 s⁻¹.

Suitably, there is provided a sauce pellet having a viscosity of between 2500 and 3000 Pa s measured at 25°C and a shear rate of 1 s⁻¹. Suitably, the sauce pellet has a viscosity of between 18,000 and 20,000 Pa s measured at 25°C and a shear rate of 0.1 s⁻¹. Suitably, the sauce pellet has a viscosity of between 650 and 850 Pa s measured at 25°C and a shear rate of 5 s⁻¹.

Suitably, the sauce concentrate/pellet has a weight of between 10g and 100g, for example between 20g and 80g. The sauce concentrate/pellet may have a weight of between 50g and 70g, for example 60g. The sauce concentrate/pellet may have a weight of between 20g and 40g, for example 30g. Suitably, the pellets have an oval shape.

Suitably, the sauce concentrate/pellet is adapted to be combined with water to produce a sauce having a noticeably higher viscosity than water. Suitably, the sauce concentrate/pellet is adapted to be combined with water to produce a sauce which thickens on heating as water evaporates and/or thickens on cooling.

Suitably the sauce concentrate/pellet is adapted to be combined with water to produce a sauce having a viscosity of between 2 and 14 measured as cm's of flow over a 10 second period using a Bostwick consistometer at a temperature of between 40°C and 99°C, for example 70°C. Suitably the sauce concentrate/pellet is adapted to be combined with water to produce a sauce having a viscosity of between 3 and 13 measured as cm's of flow over a 10 second period using a Bostwick consistometer. at a temperature of between 70°C and 99°C, for example 85°C. Suitably the sauce concentrate/pellet is adapted to be combined with water to produce a sauce having a viscosity of between 3 and 10 measured as cm's of flow over a 10 second period using a Bostwick consistometer suitably at a temperature of between 40°C and 65°C, for example 55°C.

Suitably, the viscosity is determined by the following method:
1 Take 60g of sauce concentrate/pellet and whisk into 400g of hot water at +90°C
2 Put mixture into a 10inch (25.4cm) diameter aluminium pan, place lid on & put on middle shelf of pre-heated oven at 180°C
3 Cook for 30 minutes, then remove from oven
4 Record temperature of sauce & then test viscosity as in 5 below
5 Test viscosity on Bostwick for 10 seconds - note reading
6 Leave for 10 minutes, record temperature then repeat 5 above.

According to a second aspect of the present invention there is provided a method of manufacturing a sauce concentrate and/or a sauce pellet wherein the method comprises combining flour; a fibre component; and optionally a starch component together with other foodstuffs.

Suitably, there is provided a method of manufacturing a sauce pellet wherein the method comprises combining flour; a fibre component; and optionally a starch component together with other foodstuffs and forming pellets there from.

Suitably, the method comprises combining flour; a fibre component; and other foodstuffs and forming sauce concentrate and/or sauce pellets there from.

Suitably, the method comprises combining flour; a fibre component; and a starch component together with other foodstuffs and forming sauce concentrate and/or sauce pellets there from.

Suitably, said other foodstuffs can be selected from the group consisting of: oil; fat; tomato paste; tomato puree; butter; tomato powder; buttermilk; vegetables; fruit; milk; cream; flavouring; salt; sugar; sweeteners; spices; and herbs.

Suitably, the method comprises combining components as detailed in the first aspect.

Suitably, the method comprises combining wet components and dry components. Suitably, a dry component is classed as any component having less than 20% moisture.

Suitably, the method comprises combining two or more, suitably three or more wet components before combining the flour, fibre and starch.

Suitably, the method comprises combining two or more, suitably three or more wet components and then combining one or more, suitably two or more dry components before combining the flour, fibre and starch.

Suitably, the method comprises combining all wet components before combining flour, fibre or starch. Suitably, the method comprises combining all other components before combining flour, fibre or starch.

Suitably, the method comprises acidifying one or more components. Suitably, the method comprises acidifying one or more components with vinegar. Suitably, the method comprises acidifying one or more components to preserve them. The method may for example comprise acidifying a herb, for example thyme. Suitably, the method comprises acidifying any component which requires acidifying before adding any further components.

Suitably, with the exception of any components which require acidifying, the wet components, other than oil which is suitably added later, are suitably added before the dry components.

Suitably, the dry components, other than fibre, flour and starch, are added once the wet components, other than oil, have been added.

Suitably, oil is added after the dry components, other than flour, fibre and starch, have been added.

Suitably, the flour, fibre and starch are added after the wet components. Suitably, the flour, fibre and starch are added after the other dry components. Suitably the flour, fibre and starch are the last components to be added.

Suitably, the method comprises adding a carrier and/or a bulking agent before combining flour, fibre or starch. Suitably, the method comprises combining a carrier and a bulking agent before combining flour, fibre or starch.

Suitably, the method comprises adding oil and/or fat before combining flour, fibre or starch. Suitably, the method comprises combining a carrier, a bulking agent and an oil and/or fat before combining flour, fibre or starch.

The method may comprise combining components with high moisture contents first and components with lower moisture contents last.

Suitably, the method comprises combining liquid components such as for example stocks and tomato paste and then adding powder components to them. Suitably, adding powders to liquids rather than liquids to powders may minimise clumping of the powders and/or may ensure more homogenous mixing of the powders throughout the combination in a mass production process.

Suitably, where the sauce concentrate/pellet comprises a starch component and the sauce concentrate/pellet comprises sugar then the method may comprise adding the sugar after the starch component.

The method may comprise adding any sugar after the flour and fibre component have been combined. Suitably, where the sauce concentrate/pellet comprises a starch component the method may comprise adding any sugar after the flour, fibre component and starch component have been combined.

The method may comprise adding any salt after the flour and fibre component have been combined. Suitably, where the sauce concentrate/pellet comprises a starch component the method may comprise adding any salt after the flour, fibre component and starch component have been combined.

Suitably, where the method comprises adding sugar the sugar is added after any wet components. Suitably, where the method comprises adding any component having a high sugar content that component is added after any wet components.

Suitably, where the method comprises adding salt the salt is added after any wet components.

Suitably, the method comprises mixing components to produce a paste which is sufficiently flowable that it can be dispensed into pots or extruded to form pellets.

Suitably, the method comprises mixing components at between 10°C and 20°C, suitably from 12°C to 18°C. Suitably, the method comprises combining components to form a liquid or semi-solid composition which is flows at temperatures of between 10°C and 20°C. Suitably, the method comprises combining components to form a liquid or semi-solid composition which is pumpable at temperatures of between 10°C and 20°C. Suitably, the method comprises combining components to form a paste. Suitably, on formation the paste is flowable and pumpable but it becomes more viscous over time.

Suitably the method does not comprise removing more than 10% moisture from the paste. Suitably, the method does not comprise removing more than 5% moisture from the paste. The method may not comprise removing any moisture from the paste.

Suitably, the method does not employ an evaporation step to remove water from the paste. Suitably, the method comprises combining dry and wet components so as to produce a paste having the desired moisture content and viscosity. Suitably, the method comprises combining components to form a paste in such a manner that excess water is not introduced into the paste.

Suitably, the method does not comprise cooking the components once combined. Suitably the method employs uncooked ingredients. Suitably, the method employs fresh ingredients. The method may not employ any cooked ingredients.

The method may comprise extruding a mixture of sauce concentrate components and forming pellets from the extrusion. Suitably, the method comprises extruding a mixture of sauce concentrate components in the form of a paste and forming pellets from the extrusion. The method may alternatively comprise depositing a mixture of sauce concentrate components into a container which may for example comprise a sachet or a pot. Suitably, the method comprises depositing a mixture of sauce concentrate components in the form of a paste into a container which may for example comprise a sachet or a pot.

Suitably, the method comprises mixing the components to form a paste and extruding the paste to form pellets. Suitably, pellets are formed by being pressed out from a paste.

Suitably the method comprises using a vacuum extrusion machine to extrude the paste. Suitably the pellets are formed by extrusion at a rate of from 150 to 400 Kg per hour, for example around 250 Kg per hour.

Suitably, the method comprises depositing the paste into a nitrogen tunnel. Suitably, the method comprises depositing the paste into a tunnel at a temperature of -100°C or lower, for example around -120°C. Suitably, the method comprises cooling the paste to below 0°C. Suitably, the method comprises cooling the paste to below -10°C. Suitably, the method comprises cooling the paste to below -20°C, for example to -25°C +/-3°C.

Suitably, the method comprises packaging pellets. Suitably, the method comprises packaging pellets with a substrate, suitably meat. The pellets may be distributed together with a substrate.

The method may alternatively comprise mixing the components to form a paste and depositing the paste into pots to form potted sauce concentrate. Suitably, where the paste is to be deposited into pots rather than extruded to form pellets it has a lower viscosity to aid deposition.

Suitably, the method comprises adjusting the moisture content and so the viscosity depending on whether the paste is to be extruded to form pellets or deposited, for example into pots. Suitably the paste has a higher moisture content when it is to be deposited which may be achieved by incorporating a liquid component such as tomato juice.

Suitably the method comprises filling pots. Suitably the method comprises filling pots with sauce concentrate. Suitably, the method comprises filling the paste into pots. Suitably, the method comprises filling pots using a pneumatic depositor. The method may comprise filling pots using a volumetric filler and suitably there is no extrusion of the composition. Suitably, the method comprises filling from 40 to 100 pots per minute. Suitably the method comprises sealing lids on the pots.

The method may comprise packaging sauce concentrate into pots for distribution separately from a substrate.

Suitably, the method comprises filling pots with sauce concentrate which is flowable and then allowing the concentrate to solidify and/or set in the pots.

Suitably, the method comprises chilling and or freezing the sauce pellets and/or sauce concentrate. Suitably, the sauce pellets and/or sauce concentrate may be frozen without affecting the flavour. Suitably, if frozen, the sauce pellets and/or sauce concentrate can be defrosted and shipped as a chilled rather than frozen product.

Suitably, the method comprises packaging the product and storing it at below 0°C prior to distribution. Suitably, the method comprises storing the product at below -10°C. Suitably, the method comprises storing the product at below -15°C, for example at -18°C +/-3°C.

Suitably, the method comprises manufacturing a sauce concentrate and/or pellet according to the first aspect. Suitably, the method comprises manufacturing a pellet according to the first aspect.

The method may comprise any feature as described in relation to the first aspect.

According to a third aspect of the present invention there is provided a method of forming a sauce, wherein the method comprises combining a sauce concentrate and/or sauce pellet according to the first aspect and/or a sauce concentrate and/or sauce pellet manufactured according to the method of the second aspect with water and/or a water based liquid to form a sauce.

Suitably, the method comprises combining a sauce pellet according to the first aspect and/or a sauce pellet manufactured according to the method of the second aspect with water to form a sauce.

Suitably, the method comprises combining the sauce concentrate/pellet and water with mixing, suitably with stirring. The method may comprise combining the sauce concentrate/pellet and water with heating.

Suitably, the method comprises combining the sauce concentrate/pellet with potable water which may be tap water. Alternatively the method may comprise combining the sauce concentrate/pellet with a composition having a high water content, for example full fat milk.

Suitably, the method comprises combining the sauce concentrate/pellet with between 300 and 1000ml of water, for example between 500 and 700ml of water. Suitably, on combination with water a sauce concentrate/pellet forms a rich, flavoursome and versatile cooking sauce and/or pour over sauce.

Suitably, the method comprises cooking a substrate, suitably meat, in the sauce.

According to a fourth aspect there is provided a packaged product comprising a sauce concentrate and/or sauce pellet according to the first aspect and/or a sauce concentrate and/or sauce pellet manufactured according to the method of the second aspect.

Suitably, there is provided a packaged product comprising a sauce concentrate and/or sauce pellet sealed in a pot.

Suitably, there is provided a packaged product comprising a sauce concentrate and/or sauce pellet and a substrate, for example meat.

The sauce concentrate/pellet may comprise any feature as described in relation to the first aspect.

According to a fifth aspect there is provided a sauce pellet adapted to be combined with water and/or a water based liquid to produce a sauce, wherein the pellet comprises:
(i) flour;
(ii) a fibre component; and optionally
(iii) a starch component.

Suitably, the pellet comprises a starch component.

Suitably, the pellet comprises an oil and/or fat.

Suitably, the pellet is adapted to be combined with water to produce a sauce.

Suitably, the pellet comprises any feature as described in relation to a pellet of the first aspect. Suitably, the pellet comprises a pellet according to the first aspect. Suitably, the pellet can be manufactured by the method of the second aspect. Suitably, the pellet can be used in the method of the third aspect. Suitably, the pellet can be incorporated into a packaged product according to the fourth aspect.

### DETAILED DESCRIPTION OF PREFERRED EMBODIMENTS

The present invention will now be illustrated by way of example with reference to the following preferred embodiments.

### Example 1

A beef casserole pellet was prepared with the following composition:

| COMPONENT | % BY WEIGHT | INGREDIENT CODE |
|---|---|---|
| Heat treated wheat flour (plain) | 6.664% | SP6 |
| Fibre component - CITRI-FI M40 (citrus fibre) | 2.704% | SP10 |
| Starch component - Novation PRIMA 300 | 6.855% | SP4 |
| Rapeseed Oil | 2.094% | SP13 |
| Tomato Puree | 27.228% | SP1 |
| Tomato Powder | 19.040% | SP2 |
| White Sugar | 3.808% | SP9 |
| Salt | 6.093% | SP7 |
| Distilled Vinegar | 4.950% | SP8 |
| Paprika Extract | 0.571% | SP14 |
| Frozen Thyme | 2.666% | SP12 |
| Garlic Puree | 9.901% | SP3 |
| Beef Stock | 6.855% | SP5 |
| Red fruit concentrate | 0.571% | SP15 |

| | | |
|---|---|---|
| SP6 is a heat treated wheat flour supplied by Jardox Perfecta. SP10 is a dried citrus fibre manufactured by FiberStar Inc SP4 is food starch refined from waxy maize supplied by National Starch and Chemical, UK. SP13 is rapeseed oil. SP1 is a tomato paste resulting from the removal of water from fresh tomato pulp and concentrated to a total solids content of 28 to 30% w/w. SP2 is a tomato powder having a moisture content of 5% maximum supplied by Barnes Williams (UK & Far East) Ltd. SP9 is white granulated sugar SP7 is standard pure dried vacuum salt SP8 is 5% distilled malt vinegar supplied by Kent Foods Limited SP14 is an extract of paprika standardised with vegetable oil and rendered miscible by the addition of polysorbate 80. It also contains antioxidants, DL alpha tocopherol and ascorbyl palmiitate. It is supplied as OF2073 Clear-Col Paprika by Overseal. SP12 is IQF frozen chopped thyme - 3mm. SP3 is garlic puree produced by peeling, washing, chopping and pureeing fresh garlic cloves. SP5 is Beef stock which is a paste having comprising: Beef stock (Beef Bones and Meat, Water, Salt) (89%), Vegetable Concentrate (Tomato), Salt, Vegetables (Carrot, Onion) supplied by Aromont. SP15 is a mixed fruit concentrate supplied by Gerald McDonald & Company Limited. | | |

This composition had a pH of 4.02 measured immediately after the completion of the mixing of all the components.

The pellet had a mass of 30g.

Viscosity testing showed the pellet to be highly shear-thinning. At 25°C the pellet was plastic in nature and easy to fracture. Viscosity testing was performed using a TA Instruments ARES rheometer fitted with parallel plates (25mm diameter, gap of 2mm). The pellet had an average viscosity of 2783 Pa s (SD 24) at a shear rate of 1s⁻¹ measured at 25°C. At a shear rate of 0.1s⁻¹ measured at 25°C the pellet had an average viscosity of 19293 Pa s (SD 1104) and at a shear rate of 5s⁻¹ measured at 25°C it had an average viscosity of 730 Pa s (SD 65).

This pellet was manufactured by the following method:
1. The ingredients were weighed up and prepared;
2. Frozen thyme (-18°C) and distilled vinegar (ambient) were added to an empty mixer over a period of 1-2 minutes and then mixed at room temperature (12-18°C) for around 3 minutes to acidify the thyme;
3. Tomato puree (ambient), garlic puree (chilled 0-4°C), beef stock (chilled 0-4°C), paprika (ambient) and red fruit concentrate (<10°C) were added over a period of around 5 minutes and then the ingredients were mixed at room temperature (12-18°C) for around 5 minutes until the ingredients were evenly distributed;
4. Tomato powder (ambient), salt (ambient)and white sugar (ambient) were added over a period of around 5 minutes and then the ingredients were mixed at room temperature (12-18°C) for around 5 minutes until the ingredients were evenly distributed;
5. Rapeseed oil (ambient) was added over a period of around 5 minutes and then the ingredients were mixed at room temperature (12-18°C) for around 5 minutes until the ingredients were evenly distributed;
6. Maize starch (ambient), heat treated flour (ambient) and citrus fibre (ambient) were added over a period of around 5 minutes and then the ingredients were mixed at room temperature (12-18°C) for around 5 minutes until the ingredients were evenly distributed;
7. The mixture was then transferred to a tote bin;
8. The mixture was put through a vacuum extrusion forming machine and deposited onto a nitrogen tunnel as pellets (IQF frozen, tunnel temperature approximately -120°C, product temperature: -25°C +/-3°C);
9. The pellets were packed into pre-formed trays, metal detected and placed in a freezer at -18°C +/-3°C for storage.

A sauce pellet was used to make a beef casserole type dish, cooked in a saucepan, according to the following method:
(i) 1 tbsp of oil was preheated in a sauce pan over a moderate heat;
(ii) 250g of meat (beef) was added to the saucepan and fried until browned, once the meat had browned fresh vegetables (90g carrots and 90g swedes) were added and cooked for a further 3 minutes over a high heat;
(iii) 600ml of boiling water was added into a bowl, the sauce pellets (two 30g pellets) were added and whisked until dissolved;
(iv) The liquid was poured over the meat and vegetables in the saucepan, the pan was covered with a lid and simmered gently for 40 minutes;
(v) The lid was removed and simmering continued for a further 15 minutes;
(vi) The dish was then left to stand for 4 - 5 minutes before serving.

The viscosity of a sauce made from a pellet was determined according to the following method:
1 Take 60g of sauce pellet and whisk into 400g of hot water at +90°C
2 Put mixture into a 10inch (25.4cm) diameter aluminium pan, place lid on & put on middle shelf of pre-heated oven at 180°C
3 Cook for 30 minutes, then remove from oven
4 Record temperature of sauce & then test viscosity as in 5 below
5 Test viscosity on Bostwick consistometer for 10 seconds - note reading
6 Leave for 10 minutes, record temperature then repeat 5 above.

The results are shown in table 1 below.

| Table 1 | | | | | |
|---|---|---|---|---|---|
| Sample | Temp Step 1 | Temp Step 4 | Bostwick Step 4 | Temp Step 6 | Bostwick Step 6 |
| Previously frozen | 91.7°C | 97°C | 4 | 46°C | 3.5 |
| Fresh | 91.8°C | 85.4°C | 5 | 58.7°C | 4 |

### Example 2

A beef casserole concentrate was prepared with the following composition:

| COMPONENT | % BY WEIGHT | INGREDIENT CODE |
|---|---|---|
| | | |
| Heat treated wheat flour (plain) | 5.310% | SP6 |
| Fibre component - CITRI-FI M40 (citrus fibre) | 2.155% | SP10 |
| Starch component - Novation PRIMA 300 | 5.462% | SP4 |
| Rapeseed Oil | 1.669% | SP13 |
| Tomato Puree | 21.696% | SP1 |
| Tomato Juice | 20.319% | SP26 |
| Tomato Powder | 15.171% | SP2 |
| White Sugar | 3.034% | SP9 |
| Salt | 4.855% | SP7 |
| Distilled Vinegar | 3.944% | SP8 |
| Paprika Extract | 0.455% | SP14 |
| Frozen Thyme | 2.124% | SP12 |
| Garlic Puree | 7.889% | SP3 |
| Beef Stock | 5.462% | SP5 |
| Red fruit concentrate | 0.455% | SP15 |

The components are identical to those of Example 2 but with the further addition of component SP26.

SP26 is Tomato Juice 5-7° Brix prepared from fresh and sound tomato and supplied by Thor Foods Ltd.

The composition had a pH of 4.05 measured immediately after completion of the mixing of the final components.

The concentrate of Example 2 is similar to the pellet of Example 1 and was manufactured by the same method except that rather than producing a viscous paste which was extruded to produce pellets the method produced a less viscous paste which was filled into pots. This lower viscosity was achieved by incorporating tomato juice and so increasing the moisture content. On standing in the pots the paste firmed up and formed a pellet.

The method of manufacture was substantially the same as that of Example 1 up until stage 7 with the exception that at stage 3 tomato juice was also added to the mixture. The final stages of manufacture were as follows:
7. The mixture was then transferred to a tote bin;
8. The mixture was put into a hopper on a pot filling line, set to deposit the correct weight and the mix was filled into pots and film lids applied and heat sealed to the pots.
9. The sealed pots were put into frozen storage but they could be fully packed and distributed as a chilled product.

The sauce concentrate was used to make a beef casserole type dish, cooked in a saucepan, according to the method described in Example 1.

### Example 3

A creamy mustard pork pan fry sauce pellet was prepared with the following composition:

| COMPONENT | % BY WEIGHT | INGREDIENT CODE |
|---|---|---|
| Heat treated wheat flour (plain) | 3.048% | SP6 |
| Fibre component - CITRI-FI M40 (citrus fibre) | 0.263% | SP10 |
| Starch component - Novation PRIMA 300 | 1.927% | SP4 |
| Rapeseed Oil | 0.438% | SP13 |
| Water | 9.512% | |
| Buttermilk Powder | 26.274% | SP22 |
| White Sugar | 3.328% | SP9 |
| Salt | 2.347% | SP7 |
| Distilled Vinegar | 3.853% | SP8 |
| Natco Minced Onion 1-3mm | 2.802% | SP41 |
| Mustard Flour SG191 | 0.701% | SP40 |
| Pepper Ground White | 0.035% | SP42 |
| Lemon Juice Concentrate | 9.124% | SP58 |
| Clean Gordons Dijon Mustard | 6.699% | SP24 |
| Wholegrain Mustard | 6.306% | SP49 |
| Dan Clean Full Fat Soft Cheese | 6.130% | SP63 |
| Tewkesbury Mustard | 4.729% | SP48 |
| Pork Stock | 4.116% | SP11 |
| Sage (Frozen) RT2875 | 3.503% | SP46 |
| Garlic Puree | 2.802% | SP3 |
| English Mustard | 1.923% | SP28 |
| Phytone | 0.140% | SP43 |

| | | |
|---|---|---|
| SP6 is a heat treated wheat flour supplied by Jardox Perfecta. SP10 is a dried citrus fibre manufactured by FiberStar Inc SP4 is food starch refined from waxy maize supplied by National Starch and Chemical, UK. SP13 is rapeseed oil. SP22 is buttermilk powder comprising pasteurised cream and salt and supplied by Kent Foods Limited. SP9 is white granulated sugar SP7 is standard pure dried vacuum salt SP8 is 5% distilled malt vinegar supplied by Kent Foods Limited SP41 is 1-3mm onion granules supplied by Natco SP40 is mustard powder milled by grinding a blend of dried and partially dehulled yellow and oriental mustard seeds supplied by Perfect Limited. SP42 is ground white pepper SP58 is concentrated pasteurised lemon juice supplied by Gerald McDonald & Company Limited. SP24 mustard with spirit vinegar comprising water, mustard flour, spirit vinegar, sea salt, mustard bran, pimento and turmeric supplied by Gordon's Fine Foods. SP49 is wholegrain black mustard comprising cider vinegar, mustard seed, water, sea salt, black peppercorns, allspice and chillies available from The Tracklement Co Ltd. SP63 is soft cheese comprising cream, water, skimmed milk powder, culture, cornflour and salt supplied by Dan Dairies (UK) Ltd. SP48 is mustard comprising white wine vinegar, water, mustard flour, fresh horseradish, salt and mustard bran and supplied by Gordon's Fine Foods. SP11 is roasted pork stock comprising pork stock (pork bones, meat and fat, water)(62%), vegetable concentrates (garlic, onion, tomato), brown sugar, salt and starch (waxy maize) supplied by Aromont. SP46 is IQF frozen chopped sage - 3mm. SP3 is garlic puree produced by peeling, washing, chopping and pureeing fresh garlic cloves. SP28 is English mustard comprising mustard flour, water, white wine vinegar, sea salt and spices supplied by Tracklements. SP43 is a caramel syrup derived from organically derived sucrose by heat processing supplied by Phytone Limited | | |

This composition had a pH of 4.00 measured immediately after mixing of the final components.

This pellet was manufactured by combining the components in a mixing vessel. The flour, fibre component and starch component were added as the final components so as to ensure homogenous mixing of the other components before the mixture was caused to thicken. The mixture was then extruded to form pellets substantially as described in Example 1.

The pellet was used to make a creamy mustard pork pan fry dish by combining the pellet with water and adding to a pan in which pork was being cooked.

Further sauce pellets and concentrates were prepared as detailed in Examples 4 to 10.

### Example 4

A chilli con carne sauce pellet was prepared with the following composition:

| COMPONENT | % BY WEIGHT |
|---|---|
| | |
| Heat treated wheat flour (plain) | 5.428% |
| Fibre component - CITRI-FI M40 (citrus fibre) | 2.512% |
| Starch component - Novation PRIMA 300 | 5.428% |
| Rapeseed Oil | 1.706% |
| Sugar and salt | 18.300% |
| Other dry components - including tomato powder | 21.650% |
| Wet components (other than oil) - including tomato puree, garlic puree, vinegar and beef stock | 44.975% |

### Example 5

A lamb casserole sauce pellet was prepared with the following composition:

| COMPONENT | % BY WEIGHT |
|---|---|
| | |
| Heat treated wheat flour (plain) | 5.358% |
| Fibre component - CITRI-FI M40 (citrus fibre) | 2.511% |
| Starch component - Novation PRIMA 300 | 5.511% |
| Mint infused sunflower oil | 1.837% |
| Sugar and salt | 17.146% |
| Other dry components - including tomato powder | 18.800% |
| Wet components (other than oil) - including tomato puree, garlic puree, vinegar and lamb stock | 48.837% |

### Example 6

A beef steak sauce pellet was prepared with the following composition:

| COMPONENT | % BY WEIGHT |
|---|---|
| | |
| Heat treated wheat flour (plain) | 5.128% |
| Fibre component - CITRI-FI M40 (citrus fibre) | 0.699%% |
| Starch component - Novation PRIMA 300 | 5.128%% |
| Rapeseed Oil | 1.166% |
| Sugar and salt | 18.508% |
| Other dry components - including tomato powder | 16.690% |
| Wet components (other than oil) - including tomato puree, garlic puree, vinegar and beef stock | 52.681 % |

### Example 7

A tagine sauce concentrate was prepared with the following composition:

| COMPONENT | % BY WEIGHT |
|---|---|
| | |
| Heat treated wheat flour (plain) | 3.510% |
| Fibre component - CITRI-FI M40 (citrus fibre) | 1.755% |
| Starch component - Novation PRIMA 300 | 3.413% |
| Rapeseed Oil | 1.073% |
| Sugar and salt | 11.603% |
| Other dry components - including tomato powder | 18.877% |
| Wet components (other than oil) - including tomato puree, tomato juice, garlic puree, vinegar and lamb stock | 59.769% |

### Example 8

A bolognaise sauce concentrate was prepared with the following composition:

| COMPONENT | % BY WEIGHT |
|---|---|
| | |
| Heat treated wheat flour (plain) | 4.711% |
| Fibre component - CITRI-FI M40 (citrus fibre) | 2.153% |
| Starch component - Novation PRIMA 300 | 8.075% |
| Sugar and salt | 16.285% |
| Other dry components - including tomato powder | 16.555% |
| Wet components - including tomato puree, tomato juice, garlic puree and vinegar | 52.221 % |

The sauce concentrate did not contain any oil as the substrate with which it is used (minced beef) provides sufficient fat content to the sauce in use.

The sauce concentrate was filled into pots and on standing at a refrigerated temperature of 1-4°C the sauce concentrate set.

Viscosity testing showed the sauce concentrate to be highly shear-thinning. At 25°C the pellet was plastic in nature and easy to fracture. Viscosity testing was performed using a TA Instruments ARES rheometer fitted with parallel plates (25mm diameter, gap of 2mm). The pellet had an average viscosity of 967 Pa s (SD 31) at a shear rate of 1s⁻¹ measured at 25°C. At a shear rate of 0.1s⁻¹ measured at 25°C the pellet had an average viscosity of 6117 Pa s (SD 164) and at a shear rate of 5s⁻¹ measured at 25°C it had an average viscosity of 231 Pa s (SD 9).

The viscosity of a sauce made from the sauce concentrate was determined according to the following method:
1 Take 60g of sauce concentrate and whisk into 400g of hot water at +90°C
2 Put mixture into a 10inch (25.4cm) diameter aluminium pan, place lid on & put on middle shelf of pre-heated oven at 180°C
3 Cook for 30 minutes, then remove from oven
4 Record temperature of sauce & then test viscosity as in 5 below
5 Test viscosity on Bostwick consistometer for 10 seconds - note reading
6 Leave for 10 minutes, record temperature then repeat 5 above.

The results are shown in table 2 below.

| Table 2 | | | | | |
|---|---|---|---|---|---|
| Sample | Temp Step 1 | Temp Step 4 | Bostwick Step 4 | Temp Step 6 | Bostwick Step 6 |
| Previously frozen | 91.0°C | 79.9°C | 12.5 | 48°C | 6.5 |
| Fresh | 90.1°C | 77.1°C | 12 | 47°C | 9.5 |

### Example 9

A creamy fish and herb sauce pellet was prepared with the following composition:

| COMPONENT | % BY WEIGHT |
|---|---|
| | |
| Heat treated wheat flour (plain) | 4.052% |
| Fibre component - CITRI-FI M40 (citrus fibre) | 1.105% |
| Starch component - Novation PRIMA 300 | 5.010% |
| Rapeseed Oil | 3.684% |
| Butter (unsalted) | 25.236% |
| Salt | 2.579% |
| Other dry components - including buttermilk powder | 26.356% |
| Wet components (other than oil or butter) - including garlic puree, vinegar and fish stock | 31.978% |

### Example 10

A beef sauce pellet with a 20% lower tomato powder content than that of Example 1 was prepared with the following composition:

| COMPONENT | % BY WEIGHT |
|---|---|
| | |
| Heat treated wheat flour (plain) | 6.928% |
| Fibre component - CITRI-FI M40 (citrus fibre) | 2.811% |
| Starch component - Novation PRIMA 300 | 7.126% |
| Rapeseed Oil | 2.177% |
| Sugar and salt | 10.293% |
| Other dry components - including tomato powder | 16.429% |
| Wet components (other than oil) - including tomato puree, garlic puree, vinegar and beef stock | 54.236% |

### Example 11

A Chicken Casserole (Chasseur style) pellet was prepared with the following composition:

| COMPONENT | % BY WEIGHT |
|---|---|
| | |
| Heat treated plain flour | 5.511 % |
| Fibre component - CITRI-FI | 2.557% |
| Starch component - PRIMA 300 (Maize Starch (Corn Flour)) | 5.511% |
| Rapeseed oil | 1.705% |
| Tomato puree | 21.023% |
| Tomato powder | 15.625% |
| White sugar | 13.750% |
| Salt | 4.659% |
| Distilled vinegar | 8.239% |
| Other components - garlic puree, chicken stock, red wine powder, mushroom powder, frozen tarragon, 3mm frozen parsley, Chianti and cracked black pepper | 21.420% |

## Claims

1. A sauce concentrate and/or sauce pellet adapted to be combined with water and/or a water based liquid to produce a sauce.

2. A sauce concentrate/pellet according to claim 1, wherein the sauce concentrate/pellet comprises:
(i) an emulsifier;
(ii) a thickening agent; and optionally
(iii) a viscosity modifier.

3. A sauce pellet adapted to be combined with water and/or a water based liquid to produce a sauce and wherein the pellet, comprises:
(i) flour;
(ii) a fibre component; and optionally
(iii) a starch component.

4. A sauce concentrate/pellet according to claim 2 wherein there is provided a sauce concentrate in the form of a pellet and wherein the pellet comprises:
(i) an emulsifier comprising flour;
(ii) a thickening agent comprising a fibre component; and
(iii) a viscosity modifier comprising a starch component.

5. A sauce concentrate/pellet according to any preceding claim, wherein the sauce concentrate/pellet has a moisture content of 60% by weight or less.

6. A sauce concentrate/pellet according to any preceding claim wherein the sauce concentrate/pellet comprises an oil and/or fat.

7. A sauce concentrate/pellet according to any preceding claim, wherein the sauce concentrate/pellet comprises a carrier comprising tomato paste and/or tomato puree and/or tomato juice and/or butter and/or water.

8. A sauce concentrate/pellet according to any preceding claim, wherein the sauce concentrate/pellet comprises a bulking agent comprising tomato powder and/or buttermilk.

9. A sauce concentrate/pellet according to any preceding claim, wherein the sauce concentrate/pellet comprises an acidifying component.

10. A sauce concentrate/pellet according to any preceding claim, wherein the sauce concentrate/pellet does not comprise any cooked ingredients.

11. A sauce concentrate/pellet according to any preceding claim, wherein the sauce concentrate/pellet is adapted to produce a cook in sauce and wherein the sauce concentrate/pellet is adapted to produce a sauce which thickens as a substrate is cooked in the sauce.

12. A sauce concentrate/pellet according to any preceding claim wherein the sauce concentrate/pellet comprises:
(i) flour in an amount of between 1% and 10% by weight;
(ii) a fibre component in an amount of between 0.1 % and 4% by weight;
(iii) a starch component in an amount of between 1% and 10% by weight;
(iv) oil or fat in an amount of between 0.1 % and 5% by weight;
(v) a carrier in an amount of between 5% and 50% by weight; and
(vi) a bulking agent in an amount of between 5% and 40% by weight.

13. A method of manufacturing a sauce concentrate and/or a sauce pellet wherein the method comprises combining flour; a fibre component; and optionally a starch component together with other foodstuffs.

14. A method of forming a sauce, wherein the method comprises combining a sauce concentrate and/or sauce pellet according to any of claims 1 to 13 and/or a sauce concentrate and/or sauce pellet manufactured according to the method of claim 14 with water and/or a water based liquid to form a sauce.

15. A packaged product comprising a sauce concentrate and/or sauce pellet according to any of claims 1 to 13 and/or a sauce concentrate and/or sauce pellet manufactured according to the method of claim 14.
